# EUROPEAN PATENT APPLICATION

(11) **EP 4 748 658 A1**
(43) Date of publication of application: **27.05.2026**
(21) Application number: 25217469.3
(22) Date of filing: 20.11.2025
(51) Int. Cl.: B60R 25/24, G07C 9/00

(54) **A METHOD AND SYSTEM FOR USING A CONTACT-BASED COMMUNICATIONS CHANNEL**

(30) Priority: 20.11.2024 US 202418953523
(71) Applicant: Nagravision Sàrl, 1033 Cheseaux-sur-Lausanne (CH)
(72) Inventor: PELLETIER, Hervé, 1033 Cheseaux-sur-Lausanne (CH)
(74) Representative: Meissner Bolte Partnerschaft mbB

(57) **Abstract**

A method, system, processing circuitry, and computer program product using clothing or human skin as a contact-based communications channel to thwart man-in-the-middle radio channel communications attacks by: sending a radio signal from a first transmitter to allow an unlockable device (e.g., a vehicle) to be unlocked; receiving by a controller of the unlockable device the radio signal from the first transmitter; sending, by the controller in response to receiving radio signal from the first transmitter, a contact-based signal to the contact-based receiver through physical contact of a human being between the contact-based receiver and the unlockable device; and sending a reply signal from a second transmitter to the controller in response to receiving the contact-based signal.

## Description

### BACKGROUND OF THE INVENTION

### Field of the Invention

This disclosure relates to a method, system, processing circuitry, and computer program product using a contact-based communications channel to thwart man-in-the-middle radio channel communications attacks, and, in one embodiment, to a method, system, processing circuitry, and computer program product using clothing or human skin as a contact-based communications channel to thwart man-in-the-middle radio channel communications attacks.

### Discussion of the Background

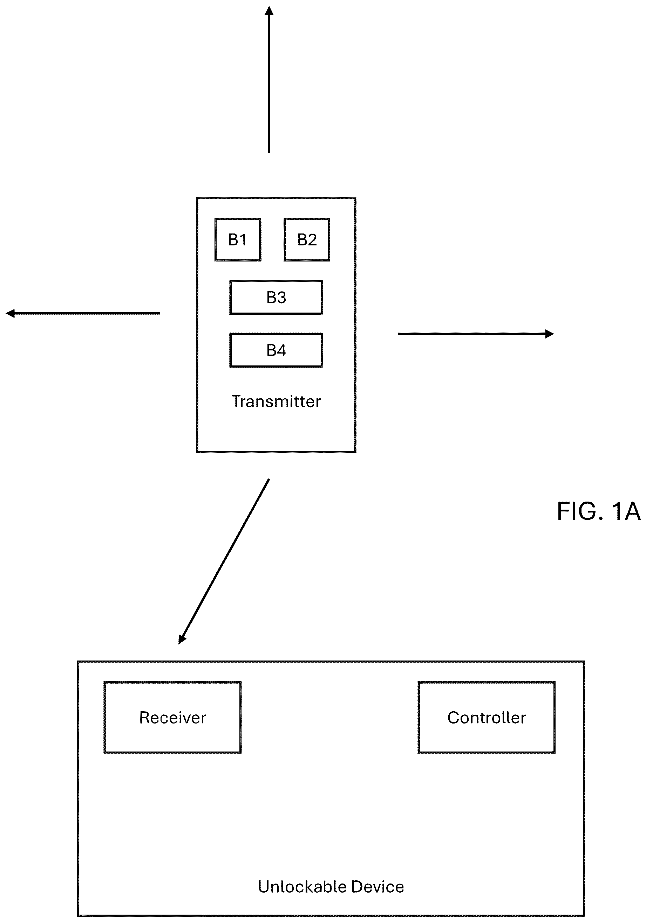

As shown in FIG. 1A, known communications systems such as those for locking and unlocking a car include a transmitter (e.g., a key fob) that periodically emits a radio beacon that can be received by the receiver within the car. The receiver of the car transfers to a controller of the car an indication that the receiver received the radio beacon. In response, the controller can perform a number of functions assuming that an owner of the car is approaching. For example, the controller can turn on the interior lights of the car to help the approaching owner see the location of the car and that there is no one inside the car.

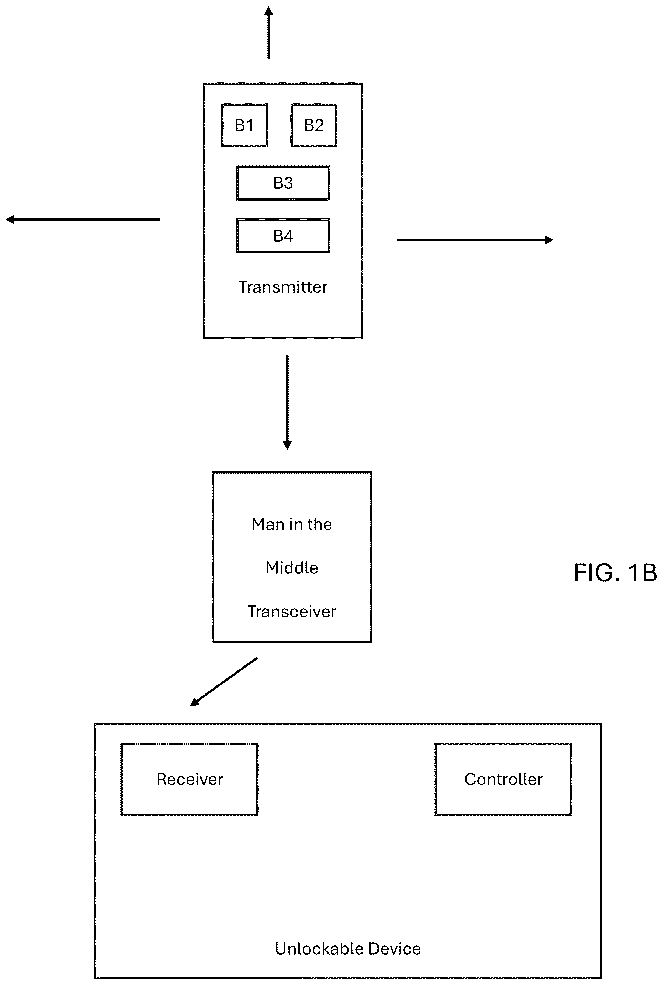

In some such configurations, upon the controller receiving an indication that the radio beacon has been received, the controller also activates processing that detects whether a person has touched the door handle of the vehicle, and, if so, the controller activates the door locks to unlock. However, as shown in FIG. 1B, a known "man-in-the-middle" attack can occur when an attacker places itself in the vicinity of the transmitter, receives the radio beacon from the transmitter and rebroadcasts it to the car which the attacker places itself close to without the owner's knowledge. Because the controller has activated processing that detects whether a person has touched the handle of the vehicle in response to the attacker's rebroadcast beacon, the attacker is able to open the car as if the attacker was the owner when the attacker touches the door handle of the vehicle. Such a compromise of physical security is undesirable.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1A is a schematic illustration of a transmitter (e.g., a key fob) emitting a radio beacon that can be received by the receiver within a car;
FIG. 1B is a schematic illustration of the transmitter of FIG. 1A emitting a radio beacon (a) that is intercepted by an attacker closer to the car than an owner of the car and (b) that tricks the controller of the car into acting on behalf of the attacker (instead of the owner);
FIG. 2 is a schematic illustration of an unlockable device (e.g., a vehicle) using clothing or human skin as a contact-based communications channel to thwart man-in-the-middle radio channel communications attacks; and

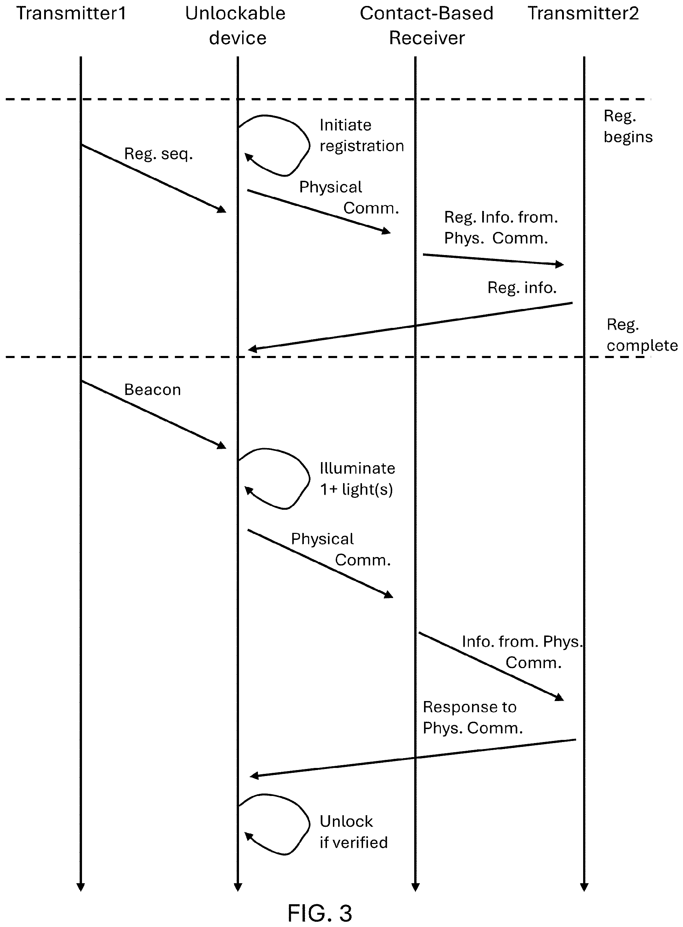

FIG. 3 is a data transfer diagram illustrating that, in response to a receiver receiving a radio beacon, an unlockable device sends, via a physical communication channel, an indication that the radio beacon was received and awaits a validated response to the indication before unlocking the unlockable device.

### DETAILED DESCRIPTION

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

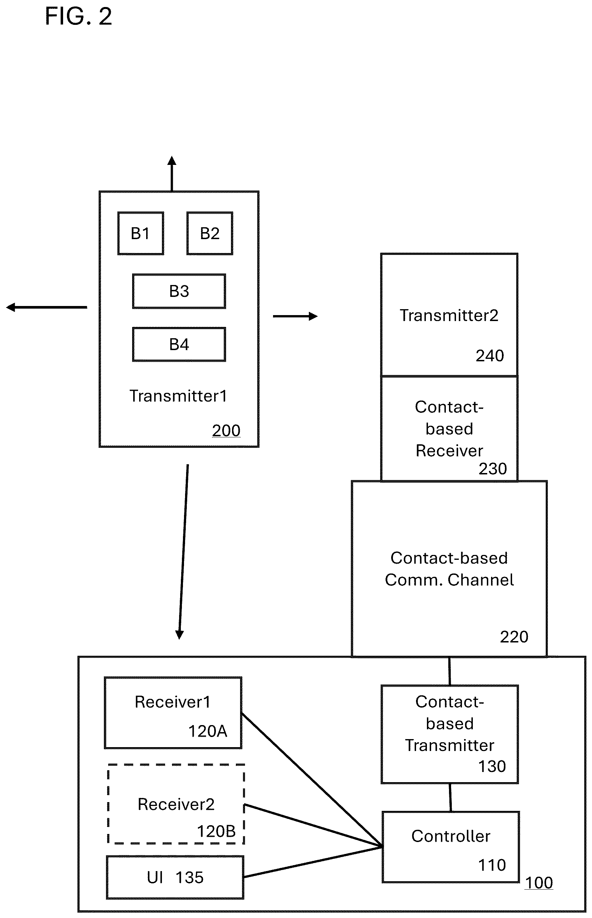

As shown in FIG. 2, an unlockable device 100 includes a controller 110 that controls a lock state (i.e., locked or unlocked) of the unlockable device. The controller 110 also may provide other functions, such as, when the unlockable device is a vehicle (e.g., a bicycle or an automobile, truck, van, or motorcycle powered by any one, or a combination of, gasoline, electricity, and hydrogen), turning on one or more lights of the vehicle. For example, the controller 110 may turn on the interior lights of the vehicle.

The unlockable device 100 also includes at least one receiver 120A. The receiver 120A receives a radio beacon signal from a portable transmitter 200 carried on a person. In one such embodiment of a transmitter 200 used with a vehicle, the transmitter 200 is equipped with a series of buttons (e.g., B1, B2, B3, and B4) which are used to send messages to the controller 110. For example, the buttons may be configured to lock or unlock the vehicle, open a trunk/door/window of the vehicle, cause the vehicle to honk or flash its light (as part of a "find it" mode or as part of an alarm mode). Other controlling functions are known in the art. In another embodiment, the transmitter 200 is a mobile device (e.g., a mobile phone) with a graphical user interface including a number of virtual buttons or other graphical user interface controls that are programmed to cause messages to be sent to the controller.

However, to avoid a "man-in-the-middle" attack, the controller 110 utilizes a contact-based communications channel to ensure that the holder of the transmitter 200 is actually close to the unlockable device before unlocking the unlockable device. In one such embodiment, the controller 110 initially undergoes a registration process to pair a transmitter 200 with a contact-based receiver 230 and its associated transmitter 240 (which may be the same as or different than the receiver 200).

In one embodiment, a user initiates a registration process using a user interface 135 of the unlockable device 100. For example, a touchscreen or video panel with accompanying buttons in a vehicle can be used as a user interface 135 of an unlockable vehicle. In the registration process, a user invokes a series of button presses/GUI selections that cause the controller 110 to set itself in registration or programming mode, much as the controller 110 would do if it needed to pair with a new key fob. The interface (e.g., buttons) of transmitter1 200 would then be activated in a prescribed manner (e.g., holding down buttons in a known pattern not associated with the buttons' normal functioning) to cause transmitter1 to send a registration message to receiver1 120A of the unlockable device. As part of the same registration process, the contact-based receiver 230 would be placed in registration mode so that it can receive registration information from the contact-based transmitter 130 under the control of controller 110. In one embodiment, the contact based-receiver 230 receives its registration information via a contact-based communications channel 220. The contact-based receiver 230 then transfers information about the received registration information to transmitter2 240. The transitter2 then forwards any necessary information to the controller 110 of the unlockable device to finish the registration process. In an alternate embodiment (not shown), the contact based-receiver 230 receives its registration information via an alternate communications channel (e.g., via a Bluetooth communication) when the contact based-receiver 230 is incorporated into a smartwatch.

In one embodiment, the contact-based transmitter utilizes a low-power electrical signal (e.g., a low voltage sine wave of a particular programmable or fixed registered frequency) that is coupled to a surface of the unlockable device (e.g., to a door handle of a vehicle). Thus, when an owner of the transmitter1 200 touches the surface of unlockable device, the low-power electrical signal is transferred through the contact-based communications channel (e.g., the skin or clothing of the owner) and received by the contact-based receiver 230. The low-power electrical signal also may be a data signal carried on a carrier wave. The data signal may include additional varying or secure information to avoid replay and/or falsification. For example, the data signal may include a random challenge or a signed message (which itself may include a random value) that has to be returned to the controller 110.

In one embodiment, transmitter2 240 and contact-based receiver 230 are housed within a same housing which is in the form of a smartwatch. In an alternate embodiment, transmitter1 200 and transmitter2 240 are the same transmitter or different transmitters but both located within a same housing (a key fob). In yet another embodiment, transmitter2 240 is in a separate housing than the contact-based receiver 230 such as when the contact-based receiver 230 is in a smart watch but the smartwatch forwards the received information to another device (e.g., a phone paired with the smartwatch) and the other device forwards the information to receiver2 120B (e.g., using a Bluetooth pairing as is used for CarPlay).

After the registration process, the controller 110 then controls receiver1 120A to listen for the beacon signal as with a convention key fob-based system. When the beacon is received, the controller performs any actions programmed to occur in the presence of the key fob (e.g., turning on at least one light of a vehicle). The controller 110 then commands the contact-based transmitter 130 to send a message a number of times and awaits a response. In one embodiment, the message being sent is sent immediately upon detection of the beacon. In an alternate embodiment, the message is not sent until a strength of the beacon reaches a particular level or until the unlockable device detects contact with the unlockable device (e.g., on a door handle of a vehicle).

Having received the message encoded by the low-power electrical signal, the contact-based receiver 230 passes information about the received low-power signal to the transmitter2 240 so that the transmitter2 240 can transmit a reply signal to the receiver2 120B. In one embodiment, the reply signal is a radio frequency communication such as a Bluetooth communication or a WiFi communication. In an embodiment in which the contact-based receiver 230 and transmitter2 240 are in the same housing the message can be directly transmitted without the need for encryption. However, in an embodiment in which the contact-based receiver 230 and transmitter2 240 are not in the same housing (or for extra security against eavesdropping), the message can be transmitted between the contact-based receiver 230 and transmitter2 240 in encrypted form (e.g., using a shared key or a private key).

As noted above, in an embodiment where the key fob is equipped with the contact-based receiver 230, transmitter1 200 and transmitter2 240 can be the same. Such a configuration could occur in a key fob that includes a sensor for the user to touch its skin to while the user is contacting the unlockable device. In such a case, the reply signal can be a radio frequency communication according to a standard used to send the radio signal of the beacon from the first transmitter. Alternatively, the reply signal can be communicated using a different protocol.

In yet another embodiment, the reply signal is an optical signal. In such a configuration, for example, a smartwatch can flash or display a static or dynamic image (e.g., QR code) that is detected by a camera of the unlockable device (e.g., a camera on side view mirror or a camera internal to the vehicle).

In one embodiment, receiver2 120B is the same as receiver1 120 such that the number of receivers can be reduced but at a cost of requiring that a response is received by a same communication protocol as the beacon is received.

In one embodiment, messages from the contact-based transmitter 130 include a value to be returned to the controller; and the controller validates that the value is returned to the controller before unlocking the unlockable device. The value may be programmed to be returned as originally sent, as modified by some process (e.g., cryptographically hashed), or as a signed message.

The contact-based transmitter 130 may communicate other than by utilizing a low-power electrical signal. For example, wherein the contact-based transmitter 130 may communicate a contact-based signal as an ultrasonic signal or as a vibrational signal.

The methods and systems described herein can be implemented in a number of technologies but generally relate to systems, devices, and processing circuitry for performing the processes described herein. In one embodiment, the processing circuitry (e.g., the controller and controller circuitry) is implemented as one of or as a combination of: an application specific integrated circuit (ASIC), a field programmable gate array (FPGA), a generic array of logic (GAL), a programmable array of logic (PAL), circuitry for allowing one-time programmability of logic gates (e.g., using fuses) or reprogrammable logic gates. Furthermore, the processing circuitry can include a computer processor and having embedded and/or external non-volatile computer readable memory (e.g., RAM, SRAM, FRAM, PROM, EPROM, and/or EEPROM) that stores computer instructions (binary executable instructions and/or interpreted computer instructions) for controlling the computer processor to perform the processes described herein. The computer processor circuitry may implement a single processor or multiprocessors, each supporting a single thread or multiple threads and each having a single core or multiple cores.

A computer program product further includes at least one non-transitory computer readable medium (e.g., an optical disc, a magnetic disk, or a non-volatile memory device such as a flash or NAND memory) having instructions stored thereon for controlling a processor to perform at least one method as described herein.

Embodiments of the present disclosure may also be as set forth in the following parentheticals.
(1) A method of securing a vehicle including, but not limited to: registering a first transmitter with a controller for the vehicle, wherein the first transmitter is a radio frequency transmitter; registering a contact-based receiver with the controller of the vehicle; receiving by the controller a radio signal sent from the first transmitter to allow the vehicle to be unlocked; sending, by the controller in response to receiving radio signal from the first transmitter, a contact-based signal to the contact-based receiver through physical contact of a human being between the contact-based receiver and the vehicle; and receiving by the controller a reply signal sent from a second transmitter in response to the contact-based signal having been received.
(2) The method according to (1), wherein the vehicle is any combination of an automobile, a truck, a van, and a motorcycle.
(3) The method according to either one of (1) and (2), wherein the contact-based signal is a low-power electrical signal.
(4) The method according to any one of (1)-(3), wherein the contact-based signal is a low-power electrical signal having a registered frequency.
(5) The method according to any one of (1)-(4), wherein the contact-based receiver is a watch in contact with the human being and the first transmitter is a key fob.
(6) The method according to any one of (1)-(4), wherein the contact-based receiver is a key fob in contact with the human being, and wherein the first transmitter is contained within a housing of the key fob.
(7) The method according to any one of (1)-(6), wherein the reply signal comprises a radio frequency communication reply signal.
(8) The method according to (7), wherein the radio frequency communication reply signal is a radio frequency communication according to a Bluetooth standard.
(9) The method according to (7), wherein the radio frequency communication reply signal is a radio frequency communication according to a WiFi standard.
(10) The method according to (7), wherein the radio frequency communication reply signal is a radio frequency communication according to a standard used to send the radio signal from the first transmitter.
(11) The method according to any one of (1)-(2), wherein the reply signal is an optical signal.
(12) The method according to any one of (1)-(11), wherein the contact-based signal includes a value to be returned to the controller; and wherein the reply signal comprises the value to be returned to the controller.
(13) The method according to any one of (1)-(2) and (12), wherein the contact-based signal is an ultrasonic signal.
(14) The method according to any one of (1)-(2) and (12), wherein the contact-based signal is a vibrational signal.
(15) The method according to any one of (1)-(14), wherein the contact-based signal includes a challenge value; and wherein the reply signal comprises a cryptographic result of applying a cryptographic process to the challenge value.
(16) The method according to (15), wherein the cryptographic process is a message signing process.
(17) The method according to (15), wherein the cryptographic process is a hashing process.
(18) A method of securing an unlockable device including, but not limited to: registering a first transmitter with a controller for the unlockable device, wherein the first transmitter is a radio frequency transmitter; registering a contact-based receiver with the controller of the unlockable device; receiving by the controller a radio signal sent from the first transmitter to allow the unlockable device to be unlocked; sending, by the controller in response to receiving radio signal from the first transmitter, a contact-based signal to the contact-based receiver through physical contact of a human being between the contact-based receiver and the unlockable device; and receiving by the controller a reply signal sent from a second transmitter in response to the contact-based signal having been received.
(19) A system for securing an unlockable device including, but not limited to: a contact-based transmitter; and a controller including but not limited to: a processor; and a memory for storing instructions for controlling the processor to perform the steps of any one of (1)-(18).
(20) The system according to (19), wherein the unlockable device is a vehicle.
(21) The system according to (19), wherein the unlockable device is any one or any combination of, a bicycle or an automobile, truck, van, or motorcycle powered by any one, or a combination of, gasoline, electricity, and hydrogen.
(22) A computer program product including, but not limited to, at least one non-transitory computer readable medium having instructions stored thereon for controlling a processor to perform the steps of any one of (1)-(18).

Thus, the foregoing discussion discloses and describes merely exemplary embodiments of the present disclosure. As will be understood by those skilled in the art, the present disclosure may be embodied in other specific forms without departing from the spirit thereof. Accordingly, the disclosure of the present disclosure is intended to be illustrative, but not limiting, of the scope of the disclosure, as well as other claims. The disclosure, including any readily discernible variants of the teachings herein, defines, in part, the scope of the foregoing claim terminology such that no inventive subject matter is dedicated to the public.

## Claims

1. A method of securing a vehicle comprising:
registering a first transmitter with a controller for the vehicle, wherein the first transmitter is a radio frequency transmitter;
registering a contact-based receiver with the controller of the vehicle;
receiving by the controller a radio signal sent from the first transmitter to allow the vehicle to be unlocked;
sending, by the controller in response to receiving radio signal from the first transmitter, a contact-based signal to the contact-based receiver through physical contact of a human being between the contact-based receiver and the vehicle; and
receiving by the controller a reply signal sent from a second transmitter in response to the contact-based signal having been received.

2. The method as claimed in claim 1, wherein the vehicle is an automobile.

3. The method as claimed in either claim 1 or claim 2, wherein the contact-based signal is a low-power electrical signal., in particular wherein the contact-based signal is a low-power electrical signal having a registered frequency.

4. The method as claimed in any one of claims 1 to 3, wherein the contact-based receiver is a watch in contact with the human being and the first transmitter is a key fob.

5. The method as claimed in any one of claims 1 to 4, wherein the contact-based receiver is a key fob in contact with the human being, and wherein the first transmitter is contained within a housing of the key fob.

6. The method as claimed in any one of claims 1 to 5, wherein the reply signal comprises a radio frequency communication reply signal.

7. The method as claimed in claim 6, wherein the radio frequency communication reply signal is a radio frequency communication according to a Bluetooth standard and/or according to a WiFi standard, and/or according to a standard used to send the radio signal from the first transmitter.

8. The method as claimed in any one of claims 1 to 7, wherein the reply signal is an optical signal.

9. The method as claimed in any one of claims 1 to 8, wherein the contact-based signal includes a value to be returned to the controller; and
wherein the reply signal comprises the value to be returned to the controller.

10. The method as claimed in any one of claims 1 to 9, wherein the contact-based signal is an ultrasonic signal.

11. The method as claimed in any one of claims 1 to 10, wherein the contact-based signal is a vibrational signal.

12. The method as claimed in any one of claims 1 to 11, wherein the contact-based signal includes a challenge value; and
wherein the reply signal comprises a cryptographic result of applying a cryptographic process to the challenge value.

13. The method as claimed in claim 12, wherein the cryptographic process is a message signing process, and/or a hashing process.

14. A system for securing a vehicle comprising:
a contact-based transmitter; and
a controller comprising:
a processor; and
a memory for storing instructions for controlling the processor to perform the steps of:
registering a first transmitter with the controller for the vehicle, wherein the first transmitter is a radio frequency transmitter;
registering a contact-based receiver with the controller of the vehicle;
receiving by the controller a radio signal sent from the first transmitter to allow the vehicle to be unlocked;
sending, by the by the contact-based transmitter, under control of the controller in response to receiving radio signal from the first transmitter, a contact-based signal to the contact-based receiver through physical contact of a human being between the contact-based receiver and the vehicle; and
receiving by the controller a reply signal sent from a second transmitter in response to the contact-based signal having been received.

15. A computer program product comprising:
at least one non-transitory computer readable medium having instructions stored thereon for controlling a processor to perform the steps of:
registering a first transmitter with a controller for a vehicle, wherein the first transmitter is a radio frequency transmitter;
registering a contact-based receiver with the controller of the vehicle;
receiving by the controller a radio signal sent from the first transmitter to allow the vehicle to be unlocked;
sending, by the controller in response to receiving radio signal from the first transmitter, a contact-based signal to the contact-based receiver through physical contact of a human being between the contact-based receiver and the vehicle; and
receiving by the controller a reply signal sent from a second transmitter in response to the contact-based signal having been received.
